Europäisches Patentamt

European Patent Office

Office européen des brevets

(11) Veröffentlichungsnummer: **0 455 022 B1**

# (12) EUROPÄISCHE PATENTSCHRIFT

(45) Veröffentlichungstag der Patentschrift: **21.09.94**

(51) Int. Cl.5: **A01D 78/12**, A01D 78/10

(21) Anmeldenummer: **91105859.2**

(22) Anmeldetag: **12.04.91**

(54) **Heuerntemaschine.**

(30) Priorität: **28.04.90 DE 4013789**

(43) Veröffentlichungstag der Anmeldung:
**06.11.91 Patentblatt 91/45**

(45) Bekanntmachung des Hinweises auf die
Patenterteilung:
**21.09.94 Patentblatt 94/38**

(84) Benannte Vertragsstaaten:
**AT FR NL**

(56) Entgegenhaltungen:
**DE-U- 8 218 273**
**DE-U- 8 811 010**
**DE-U- 8 910 415**
**FR-A- 2 133 976**

(73) Patentinhaber: **Maschinenfabriken Bernard
Krone GmbH
Heinrich-Krone-Strasse 10
D-48480 Spelle (DE)**

(72) Erfinder: **Krone, Bernard
Bernard-Krone-Strasse 11
W-4441 Spelle (DE)**
Erfinder: **Kreienbaum, Hubert
Südlohner Weg 8
W-4424 Stadtlohn (DE)**
Erfinder: **Horstmann, Josef
Up de Gadde 72
W-4530 Ibbenbüren (DE)**

(74) Vertreter: **Döring, Wolfgang, Dr. Ing.
Mörikestrasse 18
D-40474 Düsseldorf (DE)**

## Beschreibung

Die vorliegende Erfindung betrifft eine Heuerntemaschine, insbesondere einen Schwader, mit mindestens einem um eine etwa senkrechte Achse umlaufenden Arbeitswerkzeug und einem darunter angeordneten Fahrwerk mit mindestens vier jeweils paarweise angeordneten Laufrädern, wobei jedes Laufradpaar zwei nebeneinander angeordnete, um eine gemeinsame etwa horizontale Radachse drehbar gelagerte Laufräder aufweist und die Radachse um eine senkrecht dazu verlaufende, etwa horizontale Tragachse schwenkbar gelagert ist.

Derartige Heuerntemaschinen dienen insbesondere zum Schwaden von breitflächig auf dem Erdboden abgelegtem landwirtschaftlichem Erntegut, wie beispielsweise geschnittenem Gras, Klee o. dgl. Hierbei wird mittels eines angetriebenen, um eine senkrechte Rotationsachse rotierenden Rechrades, welches mit Zinken bestückte sternförmig angeordnete Zinkenarme aufweist, das Erntegut über die Arbeitsbreite der Maschine zu einem Schwad zusammengelegt. Die Zinkenarme sind bei diesen Maschinen in Traglagern zentral in einem Gehäuse gelagert und werden bei ihrer Umlaufbewegung mit Hilfe einer Kurvenbahn und Steuerarmen mit Steuerrollen um die eigene Achse in einen vorgegebenen Winkelbereich gedreht, wobei die Zinken eine Schwenkbewegung ausführen.

Solche Heuerntemaschinen, insbesondere Schwader, werden entweder mit der Fronthydraulik des zugehörigen Schleppers gekoppelt, so daß die Schlepperräder hierbei kein Erntegut überfahren, oder die Anbringung der Maschine erfolgt an der Heckhydraulik des Schleppers. Es sind Maschinen bekannt, die für beide Einsatzzwecke geeignet sind.

Unter dem Arbeitswerkzeug der entsprechenden Maschine befindet sich ein Fahrwerk. Es ist hierbei bekannt, für das Fahrwerk zwei Einzelräder vorzusehen, die entweder starr oder als Nachlaufräder ausgebildet sind. Die letztgenannte Ausführungsform ist beispielsweise in der DE-U-82 18 273 beschrieben. Sie hat gegenüber der starren Ausbildung der Einzelräder den Vorteil, daß sie aufgrund der Selbstlenkbarkeit der Räder eine bessere Kurvenfahrt ermöglicht. Nachteilig bei beiden Ausführungsformen ist jedoch, daß beim Überfahren eines Hindernisses durch ein Rad das diesem Rad zugeordnete Ende des Arbeitswerkzeuges (bei Schwadern das Ende des entsprechenden Zinkenarmes) besonders weit angehoben wird, so daß das Arbeitsgerät nicht mehr funktionsgerecht arbeiten kann.

Zur Behebung des vorstehend aufgezeigten Nachteils hat man ein Fahrwerk mit zwei sogenannten Tandemachsen entwickelt (DE-U-88 11 010). Bei diesen Tandemachsen handelt es sich um sich in Längsrichtung der Maschine erstreckende, schwenkbar an einer Querachse gelagerte Achsen, an deren vorderem und hinterem Ende jeweils ein Laufrad drehbar gelagert ist. Die Laufräder sind dabei jeweils auf einer unterschiedlichen Seite der Tandemachse angeordnet. Passiert nunmehr beispielsweise das vordere Laufrad ein Hindernis und wird dadurch angehoben, so wird die mittig an der Tandemachse angeordnete Querachse nur um die Hälfte dieses Betrages angehoben, so daß sich insgesamt eine Verringerung des Hubes des zugehörigen Endes des Arbeitswerkzeuges um die Hälfte ergibt.

Bei der vorstehend beschriebenen Ausführungsform eines Fahrwerkes sind somit die beiden Laufräder eines Laufradpaares entlang einer Tandemachse in Fahrtrichtung hintereinander angeordnet. Es ist jedoch auch bereits bekannt, die Laufräder eines Laufradpaares nebeneinander anzuordnen, wobei die entsprechende Radachse eines Laufradpaares um eine senkrecht dazu verlaufende, etwa horizontale Tragachse schwenkbar gelagert ist*. Dabei bilden die beiden Tragachsen eines jeden Laufradpaares ein bügelförmiges Fahrwerk. Fährt beispielsweise ein Rad eines Laufradpaares über ein Hindernis, verschwenkt die entsprechende Radachse relativ zur Tragachse. Hierdurch findet ebenfalls nur eine Erhöhung des zugehörigen Endes des Arbeitswerkzeuges statt, die der Hälfte des Betrages bei der eingangs beschriebenen Ausführungsform entspricht.

Die zuletzt genannte Ausführungsform ist in der Praxis bekannt. Von dieser Ausführungsform geht die vorliegende Erfindung aus.

Der Erfindung liegt die Aufgabe zugrunde, eine Heuerntemaschine der angegebenen Art zu schaffen, die besonders gute Kurvenfahreigenschaften aufweist.

Diese Aufgabe wird erfindungsgemäß bei einer Heuerntemaschine der eingangs beschriebenen Art durch die im Kennzeichen des Patentanspruchs 1 angegebenen Merkmale gelöst.

Die erfindungsgemäße Lösung verbindet somit die Vorteile einer Tandem-Pendelachse gemäß der zuletzt beschriebenen bekannten Ausführungsform (geringe Anhebung des Werkzeuges beim Passieren eines Hindernisses) mit den besonders guten Kurvenfahreigenschaften einer Einzelrad-Nachlaufachse (durch die Selbstlenkfähigkeit wird ein "Radiereffekt" beim Kurvenfahren vermieden).

Bei der erfindungsgemäß ausgebildeten Ausführungsform bleibt der Effekt vollständig erhalten, daß beim Passieren eines Hindernisses durch ein Laufrad eines Laufradpaares die Radachse relativ

---

* (Prospekt der Firma Maschinenfabriken Bernard Krone GmbH, Spelle "Kreiselschwader KS" vom 10.11.1989)

zur Tragachse verkippt, so daß der entsprechende Lagerpunkt der Tragachse an der Radachse und somit auch das Arbeitswerkzeug selbst weniger angehoben wird als bei einer Einzelradausführung. Des weiteren wird durch die Anordnung einer Nachlauf-Hochachse eine Fahreigenschaft erreicht, die alle Kurvenfahreigenschaften einer Einzelrad-Nachlaufachse aufweist. Die Vorteile einer guten Bodenanpassung sind somit erfindungsgemäß mit den Vorteilen von besonders guten Kurvenfahreigenschaften kombiniert worden.

Speziell bei einem Schwader wird somit erfindungsgemäß der Zinken über seinen zugehörigen Zinkenarm genauer zum Erdboden geführt, so daß eine saubere Recharbeit der Maschine erfolgt und diese auch eine bessere Laufruhe erhält. Die Anhebung der Zinken und Zinkenarme wird im Verhältnis $\frac{b}{a} \cdot \frac{1}{2}$ h vermindert, wobei bedeuten:

a = Abstand zwischen den beiden Tragachsen der Laufradpaare

b = Abstand zwischen der Tragachse des nicht angehobenen Laufradpaares und dem angehobenen Zinken

h = Höhe des Hindernisses.

Zwischen Hochachse und Tragachse ist eine Bremse vorgesehen, mittels der die Drehbarkeit (Nachlaufeffekt) der Tragachse um die Hochachse eingestellt werden kann. Auf diese Weise läßt sich die Selbstlenkbarkeit der Laufräder steuern.

In Weiterbildung der Erfindung ist die Tragachse als Achsstummel mit einer außermittigen Vertikalbohrung ausgebildet, in der ein Achsteil der Hochachse angeordnet ist. Das entsprechende Achsteil der Hochachse ist in geeigneter Weise drehbar in dieser Vertikalbohrung gelagert, beispielsweise mit Hilfe einer geeigneten Lagerbuchse.

Bei der vorliegenden Ausführungsform der Erfindung ist die Radachse schwenkbar mit der Tragachse verbunden, und zwar zweckmäßigerweise so, daß um die Tragachse eine einen Ansatz aufweisende Buchse schwenkbar gelagert ist und daß sich die Radachse durch den Ansatz erstreckt und mit diesem drehfest verbunden ist. Insgesamt ist daher die aus Buchse, Ansatz und Radachse bestehende Einheit ein starres Gebilde, das um die Tragachse verschwenkbar ist. An den beiden Enden der Radachse sind die beiden Laufräder der Tandemanordnung drehbar gelagert. Zweckmäßigerweise kommen hierfür zwei nebeneinander angeordnete Wälzlager zwischen Radfelge und Radachse zum Einsatz. Um die Schwenkbarkeit der Radachse relativ zur Tragachse zu begrenzen, ist ein mit dem Achsteil der Hochachse in Kontakt tretendes Segment vorgesehen, das an der Buchse bzw. am Ansatz angebracht ist.

Eine besonders bevorzugte Ausführungsform der Erfindung zeichnet sich dadurch aus, daß die Hochachse durch einen Abschnitt eines in einer Vertikalebene schwenkbar am Fahrwerk gelagerten bügelförmigen Lenkers gebildet ist. Einem Arbeitswerkzeug sind dabei zwei derartige Lenker zugeordnet, die jeweils ein Tandem-Laufradpaar tragen. Beispielsweise sind die Lenker links und rechts von einem unterhalb des Arbeitswerkzeuges angeordneten Fahrwerkblock schwenkbar gelagert. Die Schwenkachse des Lenkers ist vorzugsweise mit Hilfe eines Stellzylinders zur Höheneinstellung des Arbeitswerkzeuges verschwenkbar. Der Stellzylinder erstreckt sich dabei zweckmäßigerweise zwischen dem fest an der Maschine angeordneten Fahrwerkblock und einem mit der Schwenkachse verbundenen Hebel.

Die Bremse umfaßt zweckmäßigerweise eine das Achsteil um- und die Tragachse mit Reibschluß untergreifende Reibscheibe, die elastisch gegen die Unterseite der Tragachse gepreßt ist. Die Reibscheibe wird über eine geeignete Befestigungseinrichtung, beispielsweise eine Schraube, gehaltert. Mit Hilfe der Schraube, die beispielsweise über eine Stützscheibe und Tellerfedern auf die Reibscheibe einwirkt, kann der Anpreßdruck der Reibscheibe gegen die Tragachse eingestellt werden. Zweckmäßigerweise steht eine weitere Reibscheibe mit der Oberseite der Tragachse in Reibeingriff.

Das vorstehend beschriebene erfindungsgemäß ausgebildete Tandem-Nachlauf-Fahrwerk kommt insbesondere dann zum Einsatz, wenn die Heuerntemaschine (Schwader) entweder hinten oder vorne (über die Heckhydraulik oder Fronthydraulik) starr am Schlepper angebracht ist. Hierdurch können kompliziert ausgebildete gesteuerte Spezialfahrwerke bzw. Kopplungssysteme zwischen Schlepper und Maschine entfallen. Dies schließt jedoch nicht aus, daß die Erfindung auch bei solchen Systemen Verwendung findet, beispielsweise zur Ausbildung der Tragräder bei einer Schwadmaschine (Doppelschwadmaschine) mit gesteuertem Fahrwerk, die schwenkbar mit dem Schlepper gekoppelt sind.

Die erfindungsgemäße Lösung gestattet insbesondere auch die Verwendung ein und derselben Schwadmaschine sowohl für den Frontanbau als auch für die Hintenanhängung. Verwendet man eine solche für den Frontanbau vorgesehene Schwadmaschine in der Hintenanhängung, so muß hierbei lediglich die Kurvenbahn für die Steuerung der Zinkenarme um 180° um die Vertikalachse geschwenkt werden, damit die Recharbeit in Fahrtrichtung vor den Tragrädern erfolgt. Während beim Frontanbau die beiden definierten Hochachsen der Laufradpaare in Fahrtrichtung vor der Drehachse am Fahrwerk zum Anheben und Absenken liegen, ist dies bei der Anbringung in Hintenanhangung umgekehrt. Das erfindungsgemäß ausgebildete Tandem-Nachlauf-Fahrwerk garantiert für beide Fälle ausgezeichnete Kurvenlaufeigenschaften.

Die vorstehend beschriebene Variationsmöglichkeit in bezug auf die Anbauart ist insbesondere dann erwünscht, wenn auf einem Hof mehrere Schlepper vorhanden sind und beispielsweise nur ein Schlepper mit einer Fronthydraulik ausgerüstet ist. Ist dieser Schlepper zur Zeit nicht verfügbar, so muß die Schwadarbeit mit einem Ersatzschlepper mit Heckhydraulik erfolgen können.

Es versteht sich, daß die Erfindung auch bei Maschinen zur Anwendung gelangt, die mehrere Arbeitswerkzeuge aufweisen. So besitzt beispielsweise bei einer Doppelschwadmaschine jedes Arbeitswerkzeug ein Fahrwerk, das zwei Laufradpaare aufweist, die jeweils ein Nachlaufpaar darstellen.

Die Tragachse muß auch nicht unbedingt um das Achsteil der Hochachse drehbar ausgebildet sein. Vielmehr können Tragachse und Achsteil der Hochachse fest miteinander verbunden sein. Die ganze Einheit kann dann um die definierte Hochachse drehbar am Fahrwerk gelagert sein, beispielsweise in einer dort (beispielsweise am Lenker) fest angeordneten Buchse.

Die Erfindung wird nachfolgend anhand von Ausführungsbeispielen in Verbindung mit der Zeichnung im einzelnen erläutert. Es zeigen:

Figur 1    eine schematische Draufsicht auf einen mit einer Schwadmaschine versehenen Schlepper, wobei die Schwadmaschine in Frontanbau am Schlepper angebracht ist;

Figur 2    eine schematische Draufsicht auf einen mit einer Schwadmaschine versehenen Schlepper, wobei die Schwadmaschine der Figur 1 in Hintenanhängung angebracht ist;

Figur 3    eine Seitenansicht des Fahrwerks der Schwadmaschine gemäß Figur 1, wobei bei der rechten Darstellung der Abstand zwischen Arbeitswerkzeug und Erdboden geringer eingestellt ist als bei der linken Darstellung;

Figur 4    einen Teilschnitt durch das Fahrwerk gemäß Linie IV-IV in Figur 5;

Figur 5    einen Teilschnitt durch das Fahrwerk gemäß Linie V-V in Figur 4;

Figur 6    eine entsprechende Darstellung wie Figur 5, wobei die Radachse relativ zur Tragachse verschwenkt ist; und

Figur 7    eine schematische Draufsicht auf einen mit einem Doppelschwader versehenen Schlepper.

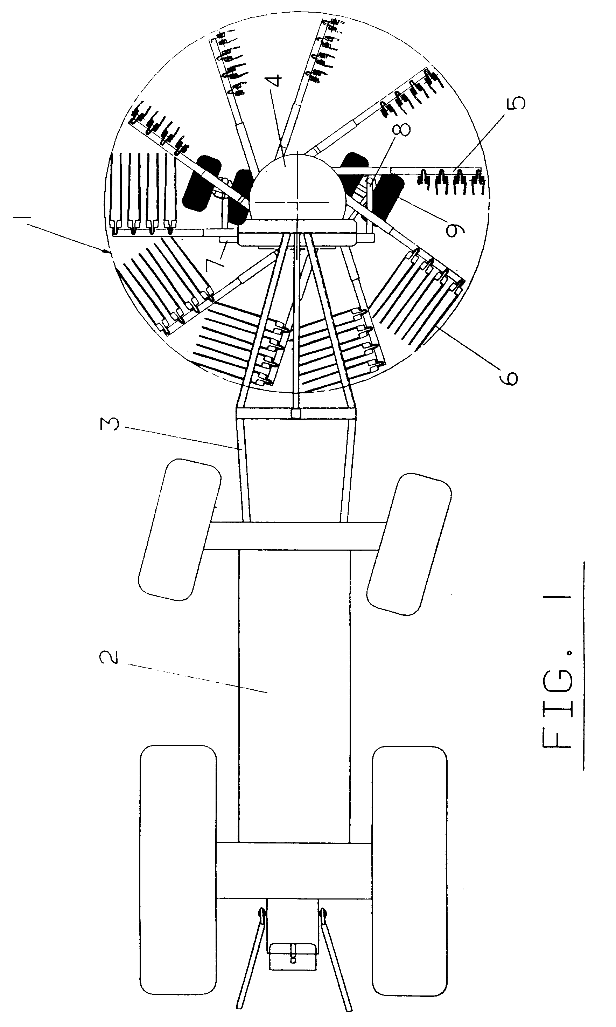

Figur 1 zeigt in schematischer Weise einen mit einer Schwadmaschine 1 versehenen Schlepper 2 in der Draufsicht, wobei die Schwadmaschine an der Fronthydraulik 3 des Schleppers angebracht ist. Die Schwadmaschine 1 besitzt ein angetriebenes, um eine senkrechte Drehachse rotierendes Rechrad, welches mit Zinken 6 bestückte, sternförmig angeordnete Zinkenarme 5 aufweist, mittels denen das Erntegut über die Arbeitsbreite der Maschine zu einem Schwad zusammengelegt wird. Die Zinkenarme 5 sind in Traglagern zentral in einem Gehäuse 4 gelagert und werden bei ihrer Umlaufbewegung mit Hilfe einer Kurvenbahn und Steuerarmen mit Steuerrollen um die eigene Achse in einem vorgegebenen Winkelbereich gedreht, wobei die Zinken 6 eine Schwenkbewegung ausführen. Die Figur zeigt im linken Bereich die Zinken etwa in Horizontallage, während sie im rechten Bereich etwa in Vertikallage, d.h. in Arbeitsstellung, zu erkennen sind.

Unter dem Gehäuse 4 für das Rechrad befindet sich ein Fahrwerk 7, das zwei in einer Vertikalebene schwenkbar an einem Achsblock gelagerte bügelförmige Lenker 8 aufweist. Ein Abschnitt eines jeden Lenkers 8 bildet die definierte Hochachse für ein in Nachlaufanordnung vorgesehenes Paar von Laufrädern 9. Die entsprechende Anordnung wird nachfolgend im einzelnen erläutert.

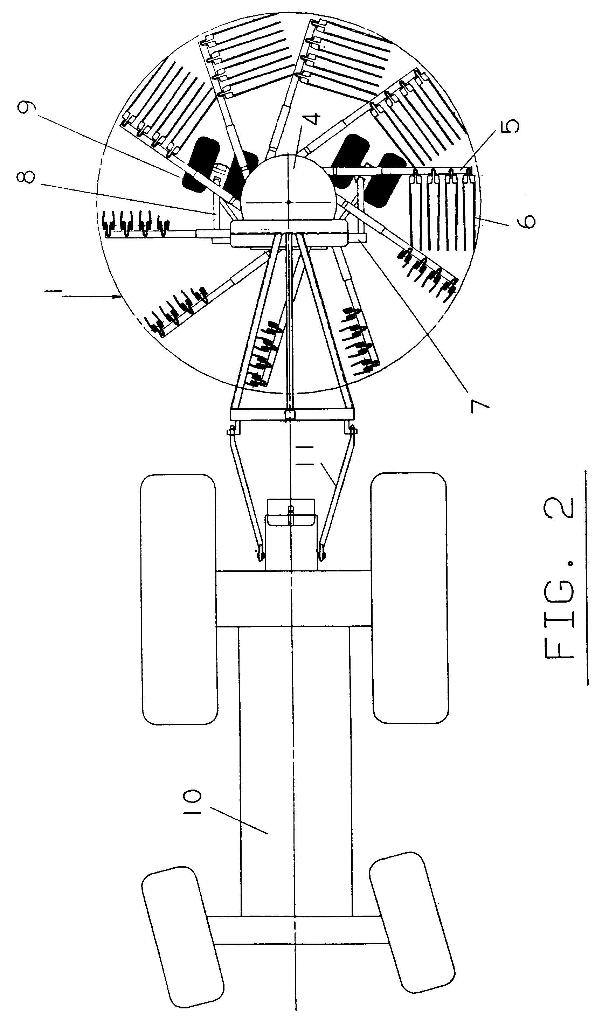

Figur 2 zeigt einen Schlepper 10 in schematischer Draufsicht, der mit einer Schwadmaschine 1 versehen ist, die an der Heckhydraulik 11 des Schleppers angebracht ist. Wie bei dem Fall der Figur 1 ist die Schwadmaschine starr mit dem Schlepper verbunden. Die Schwadmaschine entspricht hierbei der in Figur 1 gezeigten Schwadmaschine, wobei lediglich die Kurvenbahn für die Steuerung der Zinkenarme um die Vertikalachse um 180° verschwenkt worden ist, damit die Recharbeit in Fahrtrichtung vor den Trägrädern (Laufrädern 9) erfolgt. Durch die durch das Umhängen erfolgte Drehung des Gehäuses 4 mit dem Fahrwerk 7 um 180° sind bei dieser Anbringungsweise die definierten Hochachsen für die beiden Laufradpaare in Fahrtrichtung hinter den Drehachsen der Lenker 8 angeordnet, während Figur 1 den umgekehrten Fall zeigt.

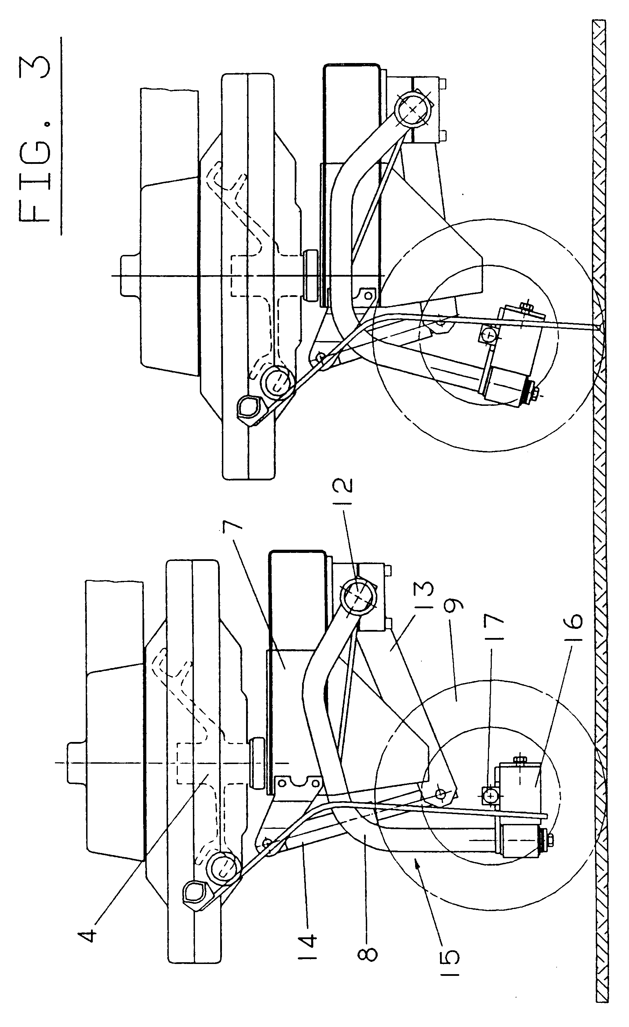

In Figur 3 ist das Fahrwerk 7 der an der Fronthydraulik 3 angebrachten Schwadmaschine 1 gemäß Figur 1 in der Seitenansicht dargestellt. Die linke und die rechte Darstellung der Figur 3 zeigen das Rechrad mit Gehäuse in unterschiedlichen Höhen relativ zum Laufrad bzw. Boden.

Wie man der Figur entnehmen kann, ist unter dem Gehäuse 4 für das Rechrad ein entsprechendes Fahrwerk 7 angeordnet, das einen Achsblock aufweist, an dem eine Schwenkachse 12 für zwei bügelartige Lenker 8 angeordnet ist, die jeweils ein Paar Laufräder 9 tragen. Die Schwenkachse 12 kann über eine geeignete Hydraulik verschwenkt werden, so daß auf diese Weise die beiden Lenker 8 mit den zugehörigen Laufrädern relativ zum Gehäuse 4 und somit zum Rechrad höheneingestellt werden können. Die Hydraulik umfaßt dabei einen zwischen dem starren Achsblock und einem mit der Schwenkachse 12 starr verbundenen Hebel 13 angeordneten Stellzylinder 14. Die linke Darstellung zeigt den Kolben des Stellzylinders 14 im ausgefahrenen Zustand, während in der rechten Darstellung der Kolben eingefahren ist. Durch Ein- und Ausfahren des Kolbens läßt sich der Abstand zwischen dem Arbeitswerkzeug und dem Erdboden regulieren und und somit die Arbeitshöhe des Arbeitswerkzeuges über dem Erdboden einstellen.

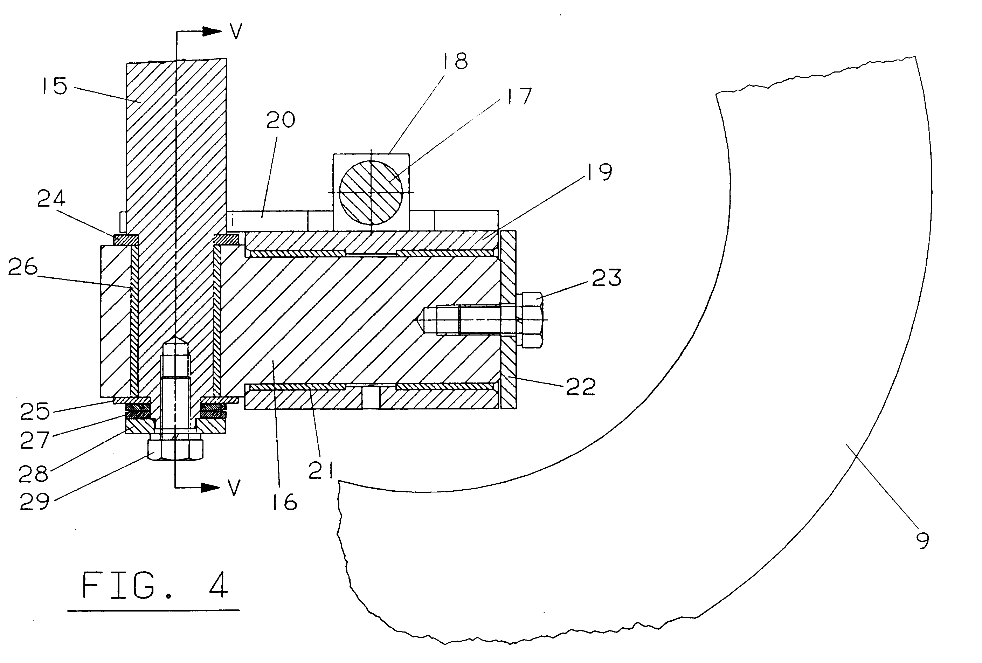

Der von der Schwenkachse 12 entfernte Endabschnitt des bügelartigen Lenkers 8 bildet ein Achsteil 15 einer definierten Hochachse, die in der in der linken Darstellung der Figur 3 gezeigten Stellung etwa vertikal angeordnet ist. Um das untere Ende dieses Achsteils 15 ist eine Tragachse 16 drehbar gelagert, um die wiederum eine senkrecht zur Tragachse verlaufende Radachse 17, an der die beiden Laufräder drehbar gelagert sind, schwenkbar gelagert ist. Hierdurch ergibt sich eine Tandem-Nachlaufanordnung, deren Aufbau im einzelnen in den Figuren 4 bis 7 dargestellt ist.

Figur 4 zeigt das Achsteil 15 der Hochachse sowie die um diesen drehbar gelagerte Tragachse 16. Bei der Tragachse 16 handelt es sich um einen Achsstummel, der in seinem einen Endbereich abgeflacht ist und eine Vertikalbohrung aufweist, durch die sich das Achsteil 15 erstreckt. In der Vertikalbohrung sitzt eine entsprechende Lagerbuchse 26. Auf der Oberseite und der Unterseite der Tragachse befinden sich zwei Reibscheiben 24, 25, die sich um das Achsteil herum erstrecken. Die obere Reibscheibe 24 liegt dabei an einem Stufenabschnitt des Achsteiles an. Ein in die untere Stirnseite des Achsteiles 15 eingeschraubter Schraubenbolzen 29 preßt eine Stützscheibe 28 gegen zwei Tellerfedern 27, von denen die obere an der unteren Reibscheibe 25 anliegt. Durch Anziehen der Schraube 29 wird der Anpreßdruck der beiden Reibscheiben 24, 25 gegen die Tragachse 16 erhöht, so daß auf diese Weise die Drehbarkeit der Tragachse und damit die Selbstlenkfähigkeit der Nachlaufanordnung gesteuert werden kann. Die aus den Teilen 24, 25, 27 und 28 sowie 29 bestehende Anordnung dient dabei als Bremse. Der Schraubenbolzen 29 dient ferner als Halterung für die Tragachse am Achsteil der Hochachse. Bei entsprechend ausgewählten Tellerfedern 27 kann mit Hilfe des Schraubbolzens die Stützscheibe 28 auf Block an die Stirnseite des Achsteils 15 gezogen werden, so daß eine konstante Bremswirkung erfolgt.

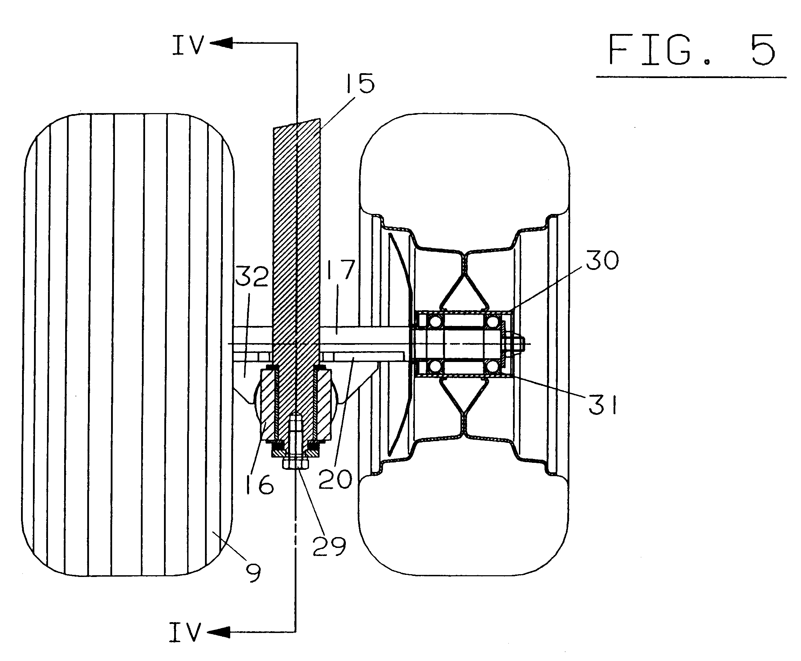

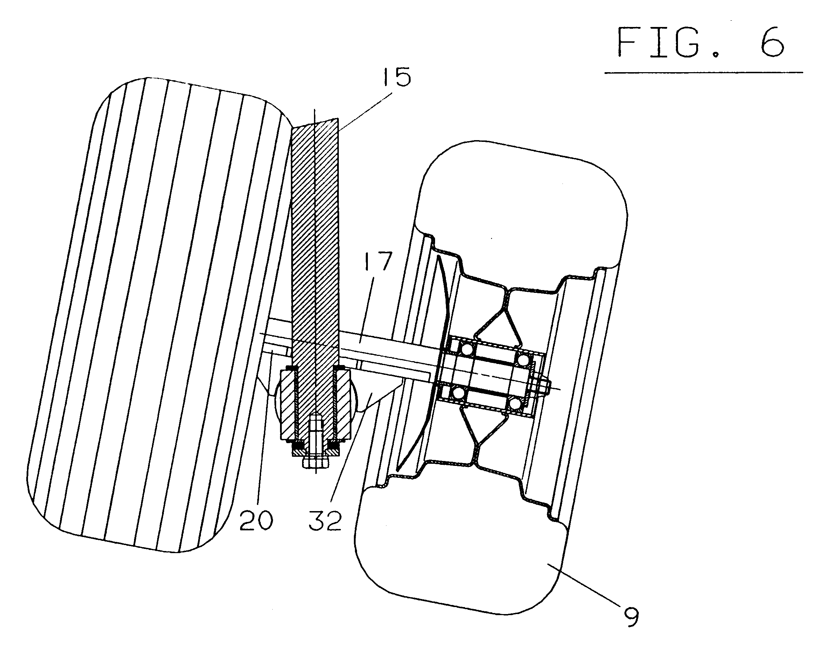

Die Figuren 5 und 6 zeigen die Lagerung der Tandem-Laufräder auf der Radachse 17 sowie die schwenkbare Lagerung der Radachse 17 relativ zur Tragachse 16. Wie man den Figuren 5 und 6 entnehmen kann, sind an den beiden Endbereichen der starr angeordneten Radachse 17 jeweils zwei nebeneinander angeordnete Wälzlager 31 vorgesehen, die sich zwischen der Nabe 30 des jeweiligen Laufrades und der Radachse 17 befinden. Die beiden Laufräder 9 sind daher unabhängig voneinander auf der Radachse 17 drehbar gelagert. Die Radachse 17 erstreckt sich mittig durch einen Ansatz 18 und ist mit diesem starr verbunden. Der Ansatz 18 ist wiederum an einer Buchse 19 befestigt, die sich um die Tragachse 16 herum erstreckt. Zwischen der Buchse 19 und der Tragachse 16 befindet sich eine geeignete Lagerbuchse 21. Die Buchse 19 ist auf der Tragachse 16 mit Hilfe einer stirnseitig an der Tragachse 16 angeordneten Scheibe 22 sowie eines stirnseitig in die Tragachse 16 eingeschraubten Schraubenbolzens 23 fixiert.

Wenn beispielsweise ein Laufrad 9 der Tandem-Anordnung über ein Hindernis fährt, wird die Radachse 17 durch Verdrehen der Buchse 19 relativ zur Tragachse 16 verschwenkt bzw. verkippt. Dieser Zustand ist in Figur 6 dargestellt. Ein entsprechendes Segment 20 dient zur Begrenzung dieser Kippbewegung. Entsprechende Knotenbleche 32 erhöhen die Steifigkeit der Verbindung zwischen Radachse und Buchse 19.

Bei dem vorstehend beschriebenen Tandem-Nachlauf-Fahrwerk kann somit die Radachse relativ zur Tragachse verschwenkt und die Tragachse relativ zur Hochachse verdreht werden. Durch das zuerst genannte Merkmal wird ein guter Bodenkontakt des Arbeitswerkzeuges beim Überfahren von Hindernissen sichergestellt, während durch das zweitgenannte Merkmal infolge der hierdurch gegebenen Nachlaufeigenschaft gute Kurvenlaufeigenschaften der Maschine erreicht werden, da sich die erfindungsgemäß vorgesehene Parallel-Pendelachse dem Wenderadius der Maschine anpaßt.

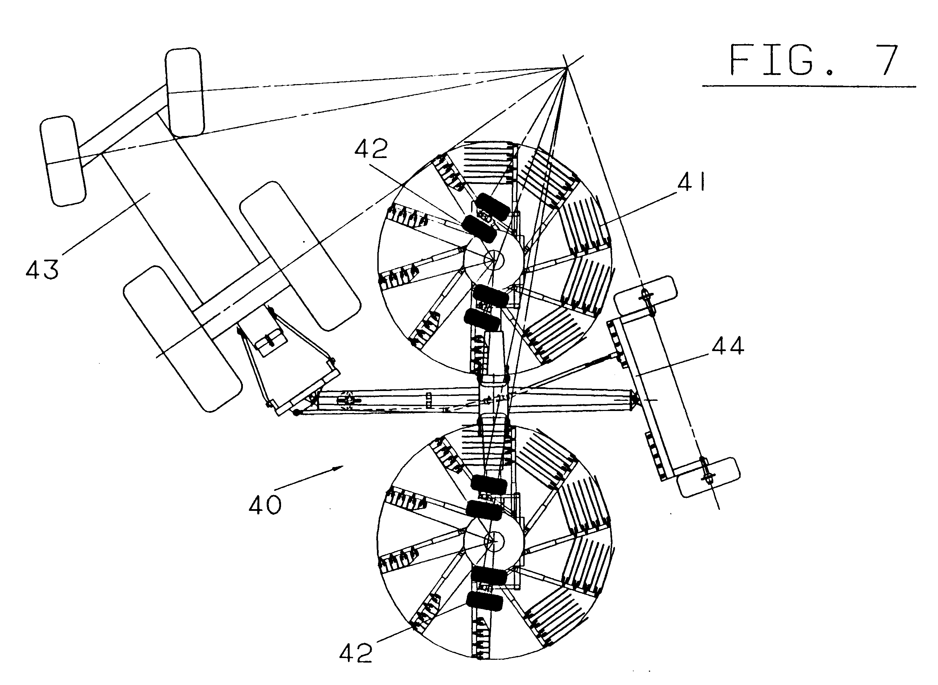

Figur 7 zeigt eine mit einem Tandem-Nachlauf-Fahrwerk ausgerüstete Doppelschwadmaschine 40, bei der jedem Arbeitswerkzeug 41 zwei Nachlaufradpaare 42 zugeordnet sind. Die Maschine ist schwenkbar in Hintenanhängung am Schlepper 43 angebracht und besitzt ein lenkbares Fahrwerk 44. Die als Tragräder dienenden Nachlaufradpaare 42 passen sich besonders gut an die Gegebenheiten bei Kurvenfahrt an, so daß Radiereffekte vermieden werden.

## Patentansprüche

1. Heuerntemaschine (1), insbesondere Schwader, mit mindestens einem um eine etwa senkrechte Achse umlaufenden Arbeitswerkzeug und einem darunter angeordneten Fahrwerk (7) mit mindestens vier jeweils paarweise angeordneten Laufrädern (9), wobei jedes Laufradpaar zwei nebeneinander angeordnete, um eine gemeinsame etwa horizontale Radachse (17) drehbar gelagerte Laufräder (9) aufweist und die Radachse (17) um eine senkrecht dazu verlaufende, etwa horizontale Tragachse (16) schwenkbar gelagert ist, dadurch gekennzeichnet, daß die Tragachse (16) unter Ausbildung des Laufradpaares als Nachlaufradpaar um eine definierte Hochachse des Fahrwerks (15) drehbar gelagert ist und daß zwischen Hochachse und Tragachse (16) eine Bremse (24, 25) vorgesehen ist, mittels der die Drehbarkeit der Tragachse (16) um die Hochachse einstellbar ist.

2. Heuerntemaschine nach Anspruch 1, dadurch gekennzeichnet, daß die Tragachse (16) als Achsstummel mit einer in Achsrichtung außermittigen Vertikalbohrung ausgebildet ist, in der ein Achsteil (15) der Hochachse angeordnet ist.

3. Heuerntemaschine nach Anspruch 1 oder 2, dadurch gekennzeichnet, daß um die Tragachse (16) eine einen Ansatz (18) aufweisende Buchse (19) schwenkbar gelagert ist und daß sich die Radachse (17) durch den Ansatz (18) erstreckt und mit diesem drehfest verbunden ist.

4. Heuerntemaschine nach einem der vorangehenden Ansprüche, dadurch gekennzeichnet, daß die Hochachse durch einen Abschnitt eines über eine Schwenkachse (12) in einer Vertikalebene verschwenkbar am Fahrwerk (7) gelagerten bügelförmigen Lenkers (8) gebildet ist.

5. Heuerntemaschine nach Anspruch 4, dadurch gekennzeichnet, daß die Schwenkachse (12) des Lenkers (8) mit Hilfe eines Stellzylinders (14) zur Höheneinstellung des Arbeitswerkzeuges verschwenkbar ist.

6. Heuerntemaschine nach einem der vorangehenden Ansprüche, dadurch gekennzeichnet, daß die Schwenkbarkeit der Radachse (17) relativ zur Tragachse (16) durch ein mit dem Achsteil (15) der Hochachse in Kontakt tretendes Segment (20) begrenzt ist.

7. Heuerntemaschine nach einem der Ansprüche 2 bis 6, dadurch gekennzeichnet, daß die Bremse eine das Achsteil (15) um- und die Tragachse (16) mit Reibschluß untergreifende Reibscheibe (25) umfaßt, die elastisch gegen die Unterseite der Tragachse (16) gepreßt ist.

8. Heuerntemaschine nach Anspruch 7, dadurch gekennzeichnet, daß die Reibscheibe (25) mit Hilfe von Tellerfedern (27) und einer Stützscheibe (28) sowie einer in die Stirnseite des Achsteiles eingeschraubten Stellschraube (29) gegen die Tragachse (16) gepreßt ist.

9. Heuerntemaschine nach Anspruch 7 oder 8, dadurch gekennzeichnet, daß die Bremse eine weitere sich um das Achsteil (15) erstreckende Reibscheibe (24) umfaßt, die mit der Oberseite der Tragachse (16) in Reibeingriff steht.

10. Heuerntemaschine nach einem der Ansprüche 1 bis 6, dadurch gekennzeichnet, daß die Tragachse mit dem Achsteil der Hochachse fest verbunden ist und daß das Achsteil der Hochachse um die definierte Hochachse drehbar am Fahrwerk gelagert ist.

## Claims

1. A hay harvesting machine (1), especially a windrower, comprising at least one working tool rotating about a substantially vertical axis, and a chassis (7) located therebelow, said chassis having at least four running wheels (9) located in pairs, wherein each pair of running wheels has two running wheels (9) disposed side by side and rotatably supported about a common substantially horizontal wheel axle (17), and the wheel axle (17) is pivotally supported about a substantially horizontal supporting axle (16) extending perpendicularly with respect to the wheel axle, characterized in that the supporting axle (16) is pivotally supported about a defined normal axis under formation of the running wheel pair as trailing wheel pair, and that a brake (24, 25) is provided between the normal axis and the supporting axle (16) by means of which the pivoting capacity of the supporting axle (18) about the normal axis is adjustable.

2. The hay harvesting machine according to claim 1, characterized in that the supporting axle (16) is formed as an axle stub with a vertical bore eccentric in axial direction, in which an axle member (15) of the normal axis is disposed.

3. The hay harvesting machine according to claim 1 or 2, characterized in that a sleeve (19) is pivotally supported about the supporting axle (16), said sleeve having a lug (18), and in that the wheel axle (17) extends through the lug (18) and is connected to the same in a manner fixed with respect to rotation.

4. The hay harvesting machine according to one of the preceding claims, characterized in that the normal axis is formed by a portion of a bow-like connecting rod (8) which is pivotally supported at the chassis (7) in a vertical plane by means of a pivot axis (12).

5. The hay harvesting machine according to claim 4, characterized in that the pivot axis (12) of the connecting rod (8) is pivotable by means of an actuating cylinder (14) for the height adjustment of the working tool.

6. The hay harvesting machine according to one of the preceding claims, characterized in that the pivoting capacity of the wheel axle (17) with respect to the supporting axle (16) is limited by a segment (20) contacting the axle member (15) of the normal axis.

7. The hay harvesting machine according to one of the claims 2 to 6, characterized in that the brake comprises a friction disc (25) engaging around the axle member (15) and frictionally engaging below the supporting axle (16), said friction disc being resiliently pressed against the lower side of the supporting axle (16).

8. The hay harvesting machine according to claim 7, characterized in that the friction disc (25) is pressed against the supporting axle (16) by means of Belleville springs (27) and a supporting disc (28) as well as an adjusting screw (29) screwed into the front side of the axle member.

9. The hay harvesting machine according to claim 7 or 8, characterized in that the brake comprises another friction disc (24) extending around the axle member (15) and being in frictional engagement with the upper side of the supporting axle (16).

10. The hay harvesting machine according to one of the claims 1 to 6, characterized in that the supporting axle is connected to the axle member of the normal axis in a fixed manner and that the axle member of the normal axis is supported at the chassis in a rotatable manner about the defined normal axis.

**Revendications**

1. Machine à faner (1), en particulier formant des andins, comportant au moins un outil de travail tournant autour d'un pivot à peu près vertical et un dispositif de roulement (7) disposé en-dessous et pourvu d'au moins quatre roues mobiles (9) disposées respectivement par paires, chaque paire de roues comprenant deux roues mobiles disposées côte à côte, montées de façon à pouvoir tourner sur un essieu commun (17) à peu près horizontal et cet essieu (17) étant monté de façon à pouvoir tourner sur un essieu porteur (16) à peu près horizontal, qui lui est perpendiculaire,
caractérisée en ce que l'essieu porteur (16), pour que la paire de roues mobiles constitue une paire de roues traînées, est monté de façon à pouvoir tourner sur un pivot supérieur (15) du dispositif de roulement,
et en ce qu'entre l'essieu supérieur et l'essieu porteur (16) il est prévu un frein (24, 25), qui permet de régler la possibilité de rotation de l'axe porteur (16) sur le pivot supérieur.

2. Machine à faner selon la revendication 1, caractérisée en ce que l'essieu porteur (16) est conçu comme une fusée d'essieu avec un alésage vertical excentré dans le sens de l'essieu, dans lequel est disposé une partie formant arbre du pivot supérieur (15).

3. Machine à faner selon la revendication 1 ou 2, caractérisée en ce qu'une douille (19) présentant une embase (18) est montée de façon à pouvoir tourner sur l'essieu porteur (16), et en ce que l'essieu (17) s'étend à travers l'embase (18) et est relié à cette dernière sans rotation possible résistante à la torsion.

4. Machine à faner selon l'une des revendications précédentes, caractérisée en ce que le pivot supérieur est formé par une partie d'un bras recourbé (8) monté de manière pivotante, dans un plan vertical par rapport au dispositif de roulement (7), grâce à un arbre pivotant (12).

5. Machine à faner selon la revendication 4, caractérisée en ce que l'arbre pivotant (12) du bras (8) peut être orienté pour régler la hauteur de l'outil de travail, à l'aide d'un vérin de réglage (14).

6. Machine à faner selon l'une des revendications précédentes, caractérisée en ce que la rotation de l'essieu (17) par rapport à l'essieu porteur (16) est limitée par un segment (20) entrant en contact avec la partie en forme d'essieu (15) du pivot supérieur.

7. Machine à faner selon l'une des revendications 2 à 6, caractérisée en ce que le frein comprend un disque de friction (25) entourant la partie en forme d'essieu (15) et venant en contact frottant avec l'essieu porteur (16), ce disque étant comprimé de manière élastique contre la face inférieure de l'essieu porteur (16).

8. Machine à faner selon la revendication 7, caractérisée en ce que le disque de friction (25) est comprimé contre l'essieu porteur (16) à l'aide de rondelles-ressorts (27) et d'une rondelle d'arrêt (28), ainsi qu'à l'aide d'une vis de réglage (29) vissée sur la face frontale de la partie formant pivot.

9. Machine à faner selon la revendication 7 ou 8, caractérisée en ce que le frein comprend un autre disque de friction (24) s'étendant autour de la partie formant pivot (15), et qui est en contact de friction avec la face supérieure de l'essieu porteur (16).

10. Machine à faner selon l'une des revendications 1 à 6, caractérisée en ce que l'essieu porteur est relié de manière fixe à la partie en forme d'essieu du pivot supérieur, et que la partie en forme d'essieu est montée sur le mécanisme de roulement de façon à pouvoir tourner sur le pivot supérieur.

FIG. I

FIG. 2

FIG. 3

FIG. 4

FIG. 5

EP 0 455 022 B1

FIG. 6

FIG. 7